# EUROPÄISCHE PATENTANMELDUNG

(11) **EP 0 950 840 A2**
(43) Veröffentlichungstag der Anmeldung: **20.10.1999**
(21) Anmeldenummer: 99105446.1
(22) Anmeldetag: 17.03.1999
(51) Int. Cl.: F16J 9/20

(54) **Ölabstreifkolbenring**

(30) Priorität: 18.04.1998 DE 19817269
(71) Anmelder: Federal-Mogul Burscheid GmbH, 51399 Burscheid (DE)
(72) Erfinder: Brillert, Hans-Rainer, Dipl.-Phys., 51399 Burscheid (DE)

(57) **Zusammenfassung**

Die Erfindung betrifft einen Ölabstreifkolbenring (1) für Verbrennungskraftmaschinen. Der Ölabstreifkolbenring besteht aus einem dünnwändigen profilierten Stahlband, an dessen Rückenfläche (4, 4') ein Federbett (5, 5') aus elastischem Material angeordnet ist.

## Beschreibung

Die Erfindung betrifft einen Ölabstreifkolbenring aus metallischem Werkstoff für Verbrennungskraftmaschinen mit mindestens einem, an der Zylinderwand anliegenden, eine geschlossene Umfangsfläche aufweisenden, Steg sowie einer auf der Rückenfläche des Ölabstreifkolbenrings angeordneten, nach außen spannenden Feder, die sich in einer als Federbett fungierenden Nut erstreckt.

Die DE 4200 489 C2 offenbart einen gattungsgemäßen Ölabstreifkolbenring. Der aus einem Stahlmaterial gefertigte Ölabstreifkolbenring weist einen ungefähr H- oder X-förmigen Querschnitt auf, so daß auf der dem Zylinder zugewandten Umfangsfläche zwei Stege gebildet werden, die als Lauffläche fungieren und auf der Rückenfläche eine Nut zur Aufnahme einer Schlauchfeder gebildet ist. Aufgrund des hohen E-Moduls von Stahl, weisen aus Stahl gefertigte Ölabstreifkolbenringe ein schlechtes Formfüllvermögen auf Um dennoch ein akzeptables Formfüllvermögen zu erzeugen, versucht man den Querschnitt des Ölabstreifkolbenrings möglichst klein zu gestalten. Begrenzt wird diese Querschnittsverkleinerung einmal durch die Notwendigkeit ein genügend großes Federbett für die am Ringrücken angeordnete Feder zur Verfügung zu stellen und zum anderen dadurch, daß die Wanddicke aus Montagegründen nicht unbegrenzt verkleinert werden kann.

Der Erfindung liegt die Aufgabe zugrunde, das Formfüllvermögen eines gattungsgemäßen Kolbenrings zu verbessern.

Diese Aufgabe wird erfindungsgemäß durch die kennzeichnenden Merkmale des Patentanspruch 1 gelöst.

Vorteilhafte Ausgestaltungen der Erfindung sind in den Unteransprüchen dokumentiert.

Durch die erfindungsgemäße Ausbildung des Ölabstreifkolbenringes wird eine Funktionsaufteilung erzeugt. Der profilierte Metallkörper übernimmt die ihm zugedachte ölabstreifende Aufgabe an der Zylinderwand der Verbrennungskraftmaschine, wobei die Querschnittsfläche um den Teil des Ringes verringert ist, der sonst allgemein zur Bildung des Federbettes benötigt wird. Durch die vorgeschlagene Zweiteilung des Ringquerschnittes läßt sich der an der Zylinderwand wirkende Metallkörper im Verhältnis H/B ≥ 2 herstellen. Dieser schmale Metallkörper hat ein kleines Flächenträgheitsmoment und weist damit ein grundsätzliches Merkmal für gutes Formfüllvervögen auf Dieser schmale Ring kann alleine nicht eingesetzt werden, da die zur Erzeugung einer ausreichenden Anpressungskraft notwendige Schlauchfeder im Ringrücken nicht mehr gehalten wird. Zur Führung einer Feder wird an der Innenfläche dieses schmalen Ringes ein Federbett aus einem elastomeren Werkstoff angebracht. Durch dieses elastomere Federbett wird das gute Formfüllvermögen des Metallbandes nur wenig beeinträchtigt und zusätzlich wird die radiale Erstreckung des Ringes vergrößert, so daß ein erfindungsgemäßer Ölabstreifkolbenring leicht in bisher übliche Kolben und Zylinder eingesetzt werden kann.

Bei Verwenung eines I-Förmigen Querschnittprofiles des Metallbandes wird auf der Rückseite eine größere Haftfläche geschaffen, die die Verbindung beider Werkstoffe verbessert.

Das metallische Profilband kann aus Guß, einfachem C-Stahl oder chromhaltigem Stahl hergestellt werden.

Die Erfindung ist anhand von Ausführungsbeispielen in der Zeichnung dargestellt und wird im folgenden näher erläutert. Es zeigen:
- Fig. 1: Querschnitt eines erfindungsgemäßen Kolbenrings
- Fig. 2: Alternative Ausgestaltung gemäß Fig. 1

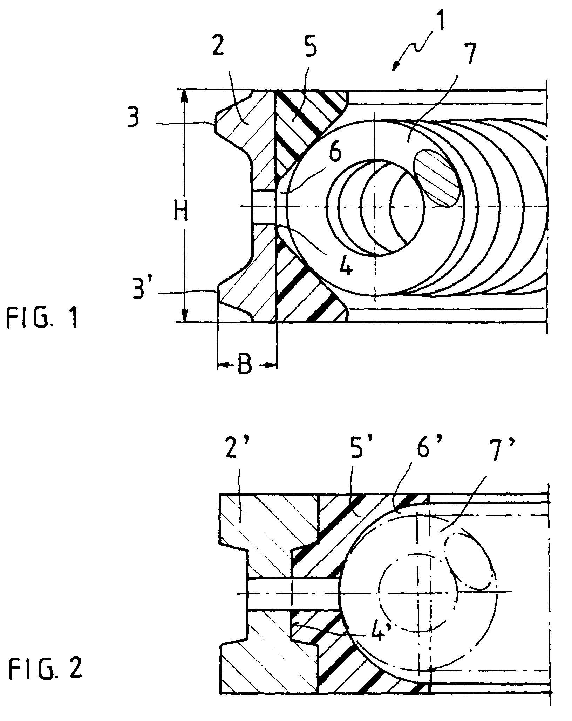

Der in der Figur 1 dargestellte Ölabstreifkolbenring 1 besteht aus einem C-förmig profilierten Stahlband 2 und weist aufder äußeren Umfangsfläche zwei an der Zylinderwand (nicht dargestellt) anliegende Stege 3, 3' auf.

Auf der Rückenfläche 4 ist im Bereich der Stege 3, 3' elastomeres Material aufvulkanisiert, derart, daß eine als Federbett 5 fungierende Nut 6 gebildet ist. In der Nut 6 erstreckt sich eine Feder 7, zum Beispiel eine Schlauchfeder. Die Nut 6 kann V-förmig ausgebildet sein und eine Tiefe aufweisen, die etwa dem Radius der Schlauchfeder entspricht. In der Figur 2 ist ein I-förmig profiliertes Stahlband 2' verwendet worden, so daß eine bessere Verklammerung des Federbettes 5' auf der Rückenfläche 4' erzeugt wird. Die Nut 6' weist eine der Feder angepaßte halbförmige Querschnittsfläche auf Durch die gezielte Funktionstrennung von Metallteil und Elastomerteil können die profilierten Stahlbänder 2, 2' sehr schmal, vorzugsweise nach dem Verhältnis H/B ≥ 2 ausgebildet werden. Die Stege können wie bei konventionellen Ölringen unbeschichtet oder mit einer Verschleißschutzschicht versehen sein, zum Beispiel verchromt.

## Patentansprüche

1. Ölabstreifkolbenring aus metallischem Werkstoff für Verbrennungskraftmaschinen mit mindestens einem, an der Zylinderwand anliegenden, eine geschlossenen Umfangsfläche aufweisenden Steg sowie einer auf der Rückenfläche des Ölabstreifkolbenrings angeordneten, nach außen spannenden Feder, die sich in einer als Federbett fungierende Nut erstreckt, dadurch gekennzeichnet, daß das Federbett (5,5') aus einem elastisch-flexiblen Material gebildet ist und fest mit dem Ölabstreifkolbenring (1) verbunden ist.

2. Ölabstreifkolbenring nach Anspruch 1, dadurch gekennzeichnet, daß das Federbett (5, 5') aus elastomeren Werkstoff gebildet ist.

3. Ölabstreifkolbenring nach Anspruch 1 und 2, dadurch gekennzeichnet, daß der Ölabstreifkolbenring (1) aus einem profilierten Stahlband besteht und das Federbett (5,5') an der Rückenfläche (4, 4') anvulkanisiert ist.

4. Ölabstreifkolbenring nach den Ansprüchen 1 bis 3, dadurch gekennzeichnet, daß das Stahlband einen C-förmigen Querschnitt aufweist.

5. Ölabstreifkolbenring nach den Ansprüchen 1 bis 3, dadurch gekennzeichnet, daß das Stahlband einen I-förmigen Querschnitt aufweist.

6. Ölabstreifkolbenring nach den Ansprüchen 1 bis 5, dadurch gekennzeichnet, daß die Höhe (H) und Breite (B) des Stahlbandes im Verhältnis H/B ≥ 2 ausgebildet ist.
